Europäisches Patentamt

European Patent Office

Office européen des brevets

(19)

(11) Veröffentlichungsnummer : **0 314 709 B1**

(12)

# EUROPÄISCHE PATENTSCHRIFT

(45) Veröffentlichungstag der Patentschrift :
**11.03.92 Patentblatt 92/11**

(51) Int. Cl.$^5$ : **G01J 9/04, G01B 9/02**

(21) Anmeldenummer : **88902383.4**

(22) Anmeldetag : **30.03.88**

(86) Internationale Anmeldenummer :
**PCT/CH88/00070**

(87) Internationale Veröffentlichungsnummer :
**WO 88/08519 03.11.88 Gazette 88/24**

(54) ZWEI-WELLENLÄNGEN-INTERFEROMETRIE MIT OPTISCHEM HETERODYNVERFAHREN.

(30) Priorität : **28.04.87 CH 1633/87**

(43) Veröffentlichungstag der Anmeldung :
**10.05.89 Patentblatt 89/19**

(45) Bekanntmachung des Hinweises auf die
Patenterteilung :
**11.03.92 Patentblatt 92/11**

(84) Benannte Vertragsstaaten :
**DE FR GB IT**

(56) Entgegenhaltungen :
**EP-A- 0 194 941**

(73) Patentinhaber : **Leica Heerbrugg AG**
**CH-9435 Heerbrugg (CH)**

(72) Erfinder : **DÄNDLIKER, René**
**14, route des Pins**
**CH-2035 Corcelles (CH)**

(74) Vertreter : **EGLI-EUROPEAN PATENT
ATTORNEYS
Horneggstrasse 4
CH-8008 Zürich (CH)**

EP 0 314 709 B1

Jouve, 18, rue Saint-Denis, 75001 PARIS

## Beschreibung

Die Erfindung betrifft ein Verfahren zur Messung von Änderungen einer variablen Interferenzstrecke eines Interferometers unter Anwendung von Zwei-Wellenlängen-Interferometrie und optischen Heterodynverfahren gemäss dem Oberbegriff des Patentanspruchs 1 sowie eine Anwendung dieses Verfahrens und eine Vorrichtung zur Ausübung desselben.

Zur optischen Messung von Distanzen von mehr als ein paar Kilometer werden üblicherweise Lichtimpulse verwendet, bei Distanzen zwischen ein paar Kilometer und ein paar Meter erfolgt die Messung im allgemeinen mittels Phasenmessung an sinusförmig moduliertem Licht, und bei Distanzen unterhalb ein paar Meter wird meist ein mit kohärentem Licht betriebenes Interferometer eingesetzt. Die optische Messung von Distanzen mit Lichtimpulsen oder sinusförmig moduliertem Licht erlaubt, eine Messgenauigkeit von etwa 1 mm bei einer Messdauer von einigen Sekunden zu erreichen. Bei der interferometrischen Messung muss die Messstrecke während der Messdauer von 10 bis 100 ms innerhalb einer Wellenlänge des Lichtes, d.h. auf etwa 0,1$\mu$m genau stabil sein: unter dieser Voraussetzung erlaubt die beispielsweise aus EP-0194941 bekannte Heterodyn-Interferometrie, eine Messgenauigkeit von etwa $10^{-3}$ Wellenlänge, d.h. etwa 1 nm zu erreichen.

Für die Messung von Distanzen bis zu ein paar 100 Meter mit einer Genauigkeit und Empfindlichkeit von Bruchteilen eines Millimeters und einer Messdauer von 10 bis 100 ms kommt jedoch keines der erwähnten Verfahren in Frage. Grundsätzlich ist zwar das Problem der optischen Distanzmessung mit einer gegenüber der herkömmlichen Interferometrie reduzierten Genauigkeit durch die sogenannte Zwei-Wellenlängen-Interferometrie lösbar. Bei der Zwei-Wellenlängen-Interferometrie ist die Auflösung im Gegensatz zur herkömmlichen Interferometrie nicht durch die Wellenlänge des Lichtes gegeben, sondern durch die äquivalente Wellenlänge, welche der Differenz der Lichtfrequenzen der beiden Wellenlängen entspricht. In den bekannten Ausführungsformen, wie beispielsweise mit der von R. Dändliker in "Optoelektronik in der Technik, Vorträge des 5. Internationalen Kongresses Laser 1981" (Springer-Verlag, 1982) auf Seiten 52-53 beschriebenen Einrichtung, muss jedoch die Messstrecke während der Messdauer wie bei der herkömmlichen Interferometrie innerhalb einer Wellenlänge des Lichtes stabil sein, was in den meisten praktischen Fällen nicht gewährleistet ist.

Aufgabe der Erfindung ist es, mit einem Zwei-WellenlängenInterferometer eine Messgenauigkeit und Empfindlichkeit von Bruchteilen eines Millimeters zu erreichen, ohne dass die Messstrecke während der Messdauer stabiler sein muss als die gewünschte Messgenauigkeit selbst. Ausserdem soll die Messung schnell erfolgen können, d.h. eine Messdauer von 10 bis 100 ms erfordern.

Diese Aufgabe wird gelöst durch das erfindungsgemässe Verfahren, das durch die im Anspruch 1 angegebene Kombination von Verfahrensschritten gekennzeichnet ist. Eine Anwendung dieses Verfahrens ist im Anspruch 9 und eine Vorrichtung zur Ausübung dieses Verfahrens ist im Anspruch 12 definiert. Vorteilhafte Weiterbildungen des Verfahrens und dessen Anwendung sowie vorteilhafte Ausbildungen der Vorrichtung ergeben sich aus den abhängigen Ansprüchen.

In Kurzfassung, es werden beim erfindungsgemässen Verfahren zwei Laserstrahlen der jeweiligen Frequenz $n_1$ und $n_2$ verwendet, die ihrerseits in zwei Teilstrahlen der jeweiligen Frequenzen $n_1$, $n_2$, $n_1+f_1$ und $n_2+f_2$ geteilt werden. Es wird die Schwebung $f_1-f_2$ gebildet und deren Phase ausgewertet, indem der Unterschied der Phase dieser Schwebung vor und nach dem Durchgang durch das Michelson-Interferometer bestimmt wird. Änderungen der Weglängen im Michelson-Interferometer bewirken eine Änderung des genannten Phasenunterschieds. Im Gegensatz zu den bekannten Verfahren ist beim erfindungsgemässen Verfahren diese Änderung des Phasenunterschieds nicht direkt von den jeweiligen Frequenzen $n_1$, $n_2$ abhängig, sondern nur von deren Differenz $n_1-n_2$. Deshalb braucht die Messstrecke während der Messdauer nur in bezug auf die äquivalente Wellenlänge der Differenzfrequenz $n_1-n_2$ und nicht in bezug auf die viel kleineren Wellenlängen der optischen Frequenzen $n_1$ und $n_2$ stabil zu sein. Ausserdem ist es sowohl mit einem Paar von Laserdioden als auch mit einem auf zwei Frequenzen emittierenden Laser leichter bzw. mit einem kleineren relativen Fehler erreichbar, die Differenz $n_1-n_2$ konstantzuhalten als die einzelnen Frequenzen $n_1$, $n_2$ selbst.

Zwar ist die Verwendung des Phasensignals zur Stabilisierung der Laserfrequenz beispielsweise aus WO-85/04009 bekannt. In WO-85/04009 wird jedoch die Verwendung eines He-Ne-Lasers beschrieben, der unter Ausnutzung des Zeeman-Effektes zwei orthogonal polarisierte Lichtstrahlen von geringer Frequenzdifferenz (typisch 1 MHz) liefert. Ein solcher He-Ne-Laser kann anstelle der aus aus EP-0194941 bekannten Anordnung als Lichtquelle für klassische Heterodyn-Interferometer verwendet werden, ist aber nicht geeignet, die beiden in der vorliegenden Erfindungen benötigten optischen Frequenzen $n_1$ und $n_2$ zu liefern: die beiden vom Zeeman-Effekt erzeugten Frequenzen sind nämlich wenig verschieden ($n_1-n_2$ = 1 MHz) und daher ist ihre äquivalente Wellenlänge von $c/(n_1-n_2)$ = 300 m zur Verwendung im Zusammenhang mit der Erfindung zu lang.

Im nachstehenden werden Beispiele des Verfahrens, der Vorrichtung und der Anwendung unter Bezugnahme auf die Zeichnungen näher beschrieben. In den Zeichnungen werden gleiche oder einander entsprechende Teile mit denselben Bezugszahlen bezeichnet. Es zeigen:

Fig. 1 ein Prinzipschema einer ersten Ausbildung eines optischen Teils der erfindungsgemässen Vorrichtung,

Fig. 2 ein Blockschema eines elektrischen Teils der erfindungsgemässen Vorrichtung,

Fig. 3 ein Prinzipschema einer zweiten Ausbildung des optischen Teils der erfindungsgemässen Vorrichtung, und

Fig. 4 ein Prinzipschema einer dritten Ausbildung der erfindungsgemässen Vorrichtung.

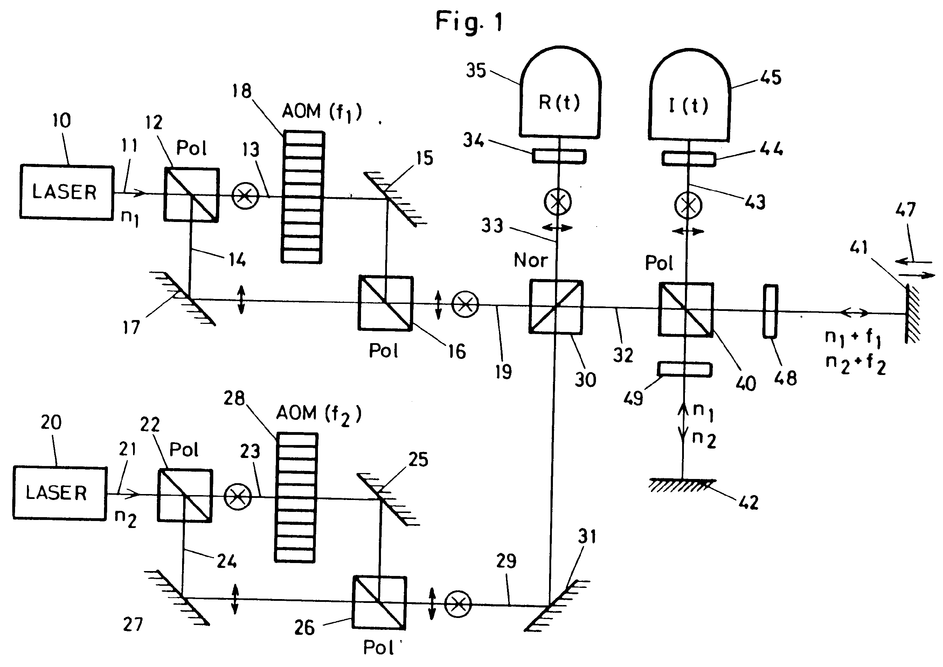

Das in Fig. 1 dargestellte Prinzipschema der erfindungsgemässen Vorrichtung zeigt eine Lasereinrichtung, die eine Laserlichtquelle 10 zur Erzeugung eines Laserlichtstrahls 11 der Frequenz $n_1$ und eine Laserlichtquelle 20 zur Erzeugung eines Laserlichtstrahls 21 der Frequenz $n_2$ umfasst. Es kann sich bei diesen Laserlichtquellen 10 und 20, die unter anderem Laserdioden sein können, um zwei separate Laserlichtquellen handeln. Die Lasereinrichtung kann aber auch aus einer einzigen Laserlichtquelle bestehen, die fähig ist, gleichzeitig die beiden Laserstrahlen der Frequenzen $n_1$ und $n_2$ zu erzeugen, beispielsweise aus einem He-Ne-Laser oder aus einem Ar-Laser unter Benutzung von verschiedenen Linien oder von zwei Modi derselben Linie. Bei He-Ne-Lasern beträgt der Modenabstand typischerweise $n_1-n_2 = 600$ MHz, was einer äquivalenten Wellenlänge von $c/(n_1-n_2) = 0,5$ m entspricht. Stabilisierte He-Ne-Laser, die zwei Modi mit orthogonaler Polarisation liefern, was ermöglicht, die beiden Frequenzen $n_1$ und $n_2$ ausserhalb des Lasers zu trennen, sind im Handel erhältlich. Bei Ar-Lasern beträgt der Modenabstand typischerweise $n_1-n_2 = 6$ GHz, was einer äquivalenten Wellenlänge von $c/(n_1-n_2) = 50$ mm entspricht: daher werden im Zusammenhang mit der Erfindung eher zwei getrennte Ar-Laser mit entsprechend abgestimmten internen Etalons verwendet. Bei Laserdioden kann die Frequenz durch Änderung des Anregungsstromes in einem Bereich von etwa 60 GHz kontinuierlich geändert werden, was einer äquivalenten Wellenlänge von $c/(n_1-n_2) = 5$ mm entspricht und die weiter unten beschriebene Weiterbildung des erfindungsgemässen Verfahrens, nämlich die absolute Distanzmessung mittels Änderung der Laserfrequenz und Integration der Phasendifferenz, ermöglicht.

Der Laserlichtstrahl 11 der Frequenz $n_1$ trifft auf ein als polarisierender Halbspiegel wirkendes optisches Element 12, das im dargestellten Beispiel ein polarisierender Strahlenteiler in der Gestalt eines Würfelprismas ist. Aus dem optischen Element 12 treten, rechtwinklig zueinander, zwei gekreuzt polarisierte Teilstrahlen 13 und 14 aus (die Polarisationsrichtungen sind auf den Lichtstrahlen mit den dafür üblichen Zeichen dargestellt). Der Teilstrahl 13 trifft auf einen Umlenkspiegel 15, und der rechtwinklig umgelenkte Teilstrahl trifft auf ein als polarisierender Halbspiegel wirkendes optisches Element 16, das im dargestellten Beispiel dem optischen Element 12 gleich ist. Seinerseits trifft der Teilstrahl 14 auf einen Umlenkspiegel 17, und der rechtwinklig umgelenkte Teilstrahl trifft ebenfalls auf das optische Element 16.

Auf dem Teilstrahl 13 ist zwischen dem optischen Element 12 und dem Umlenkspiegel 15 ein Modulator 18 angeordnet, der im dargestellten Beispiel als akusto-optischer Modulator ausgebildet ist. Der Modulator 18 verschiebt die Frequenz $n_1$ des Teilstrahls 13 um die Frequenz $f_1$ auf die Frequenz $n_1+f_1$.

Das als polarisierender Halbspiegel wirkende optische Element 16 ist so gewählt, dass die darauf eintreffenden Teilstrahlen 13 und 14 aus dem optischen Element 16 vereinigt aber mit gekreuzter Polarisation austreten, und daher als vereinigtes Teilstrahlenpaar 19 der Frequenz $n_1$ mit der einen Polarisationsrichtung und der Frequenz $n_1+f_1$ mit der anderen Polarisationsrichtung weiterlaufen.

Wie in Fig. 1 ersichtlich, wird die vorstehend beschriebene Einrichtung mit den Bezugszeichen 10 bis 19 im Doppel ausgeführt. Die zweite Ausführung ist mit den Bezugszeichen 20 bis 29 versehen, und die so bezeichneten Elemente sind den jeweils entsprechenden Elementen 10 bis 19 gleich, mit folgenden Ausnahmen: in der zweiten Ausführung hat der Laserlichtstrahl 21 der Laserlichtquelle 20 eine Frequenz $n_2$, der Modulator 28 verschiebt die Frequenz des Teilstrahls 23 um die Frequenz $f_2$ auf die Frequenz $n_2+f_2$, und das vereinigte Teilstrahlenpaar 29 umfasst Teilstrahlen der Frequenz $n_2$ mit der einen Polarisationsrichtung und Teilstrahlen der Frequenz $n_2+f_2$ mit der anderen Polarisationsrichtung.

Das Teilstrahlenpaar 19 und das Teilstrahlenpaar 29 treffen beide auf ein als nichtpolarisierender Halbspiegel wirkendes optisches Element 30, das im dargestellten Beispiel ein nichtpolarisierender Strahlenteiler in der Gestalt eines Würfelprismas ist. In Fig. 1 wird dargestellt, dass das Teilstrahlenpaar 29 zwischen den optischen Elementen 26 und 30 von einem Umlenkspiegel 31 rechtwinklig umgelenkt wird, dies ist aber entbehrlich, wenn die beiden Ausführungen mit den Bezugszeichen 10 bis 19 und 20 bis 29 zueinander um 90° verdreht angeordnet sind.

Das optische Element 30 teilt die Teilstrahlen des Teilstrahlenpaares 19 mit den Frequenzen $n_1$ und $n_1+f_1$ und die Teilstrahlen des Teilstrahlenpaares 29 mit den Frequenzen $n_2$ und $n_2+f_2$ in je ein Strahlenbündel von Messlichtstrahlen 32 und je ein Strahlenbündel von Referenzlichtstrahlen 33. Die Messlichtstrahlen 32 und die Referenzlichtstrahlen 33 treten rechtwinklig zueinander aus dem optischen Element 30 aus.

Die Referenzlichtstrahlen 33 treffen auf einen Polarisator 34 und danach auf einen Fotodetektor 35. Die Messlichtstrahlen 32 treffen auf ein als polarisierender Halbspiegel wirkendes optisches Element 40, das im dargestellten Beispiel ein polarisierender Strahlenteiler in der Gestalt eines Würfelprismas ist. Dieses optische

3

Element 40 bildet den zentralen Halbspiegel und damit den optischen Eingang und den optischen Ausgang eines Michelson-Interferometers. Das optische Element 40 teilt die Messlichtstrahlen 32 in zwei Teilstrahlen etwa gleicher Lichtintensität und führt diese Teilstrahlen in je einen von zwei Armen des Michelson-Interferometers ein. Im einen Arm des Michelson-Interferometers, der zum Messarm bestimmt ist, ist ein entsprechend dem Pfeilepaar 47 beweglicher Spiegel 41 und im anderen Arm, der zum Referenzarm bestimmt ist, ein feststehender Spiegel 42 angeordnet. Die am optischen Element 40 aus dem optischen Ausgang des Michelson-Interferometers austretenden Messlichtstrahlen 43 treffen auf einen Polarisator 44 und danach auf einen Fotodetektor 45.

Bei der in Fig. 1 dargestellten Ausbildung erfolgt die räumliche Trennung der aus dem Michelson-Interferometer austretenden Messlichtstrahlen 43 von den in das Michelson-Interferometer eintretenden Messlichtstrahlen 32 dadurch, dass in jeden Arm des Michelson-Interferometers je eine Viertelwellenplatte 48, 49 angeordnet ist. In jedem Arm des Michelson-Interferometers bewirkt der zweimalige Durchgang der Teilstrahlen durch die jeweilige Viertelwellenplatte 48, 49 eine Drehung der Polarisation, welche die gewünschte, in Fig. 1 dargestellte Umlenkung der jeweiligen Lichtstrahlen am polarisierenden optischen Element 40 bewirkt.

Die Polarisatoren 34 und 44 erfüllen die Aufgabe, die beiden verschieden polarisierten Anteile der Referenzlichtstrahlen 33 und der Messlichtstrahlen 43 zum Interferieren zu bringen. Die Polarisatoren 34 und 44 sind im dargestellten Beispiel Linearpolarisatoren, die unter 45 bezüglich der beiden Polarisationen der Referenzlichtstrahlen 33 bzw. der Messlichtstrahlen 43 angeordnet sind.

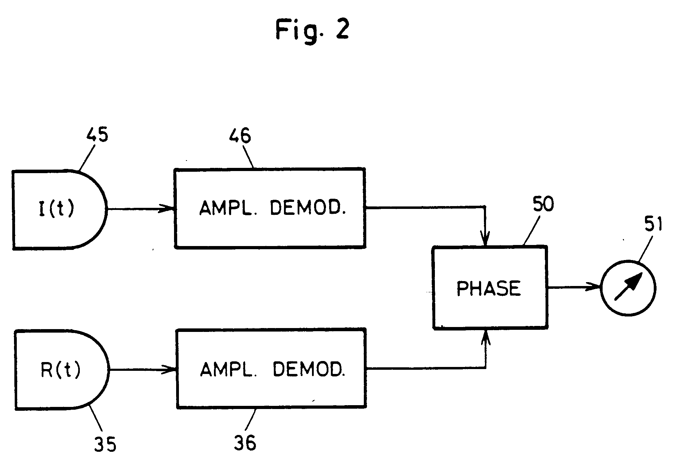

Der Fotodetektor 35 wandelt die nach dem Polarisator 34 interferierenden Referenzlichtstrahlen 33 in ein elektrisches Signal R(t), und der Fotodetektor 45 wandelt die nach dem Polarisator 44 interferierenden Messlichtstrahlen 43 in ein elektrisches Signal I(t). Diese beiden Signale I(t) bzw. R(t) werden, wie in Fig. 2 dargestellt, je einer dem Fotodetektor 35 bzw. 45 zugeordneten Demodulationseinrichtung 36 bzw. 46 zugeführt und darin nach dem quadrat der Amplitude demoduliert. Die Demodulationseinrichtungen 36 bzw. 46 können in einer an sich bekannten Variante das jeweilige Signal I(t) bzw. R(t) mit sich selbst mischen, d.h. multiplizieren, was einem quadrieren gleichkommt. In einer anderen an sich bekannten Variante können die Demodulationseinrichtungen 36 bzw. 46 als sogenannter quadratischer Detektor das jeweilige Signal I(t) bzw. R(t) gleichrichten und glätten.

Die beiden demodulierten Signale aus den Demodulationseinrichtungen 36 bzw. 46 werden einer Einrichtung 50 zur Messung der Phasendifferenz zwischen den beiden demodulierten Signalen zugeführt. Die Phasendifferenz kann auf einer Anzeige 51 angezeigt werden, sie kann aber auch für andere Zwecke verwendet werden, die im nachstehenden noch erläutert werden.

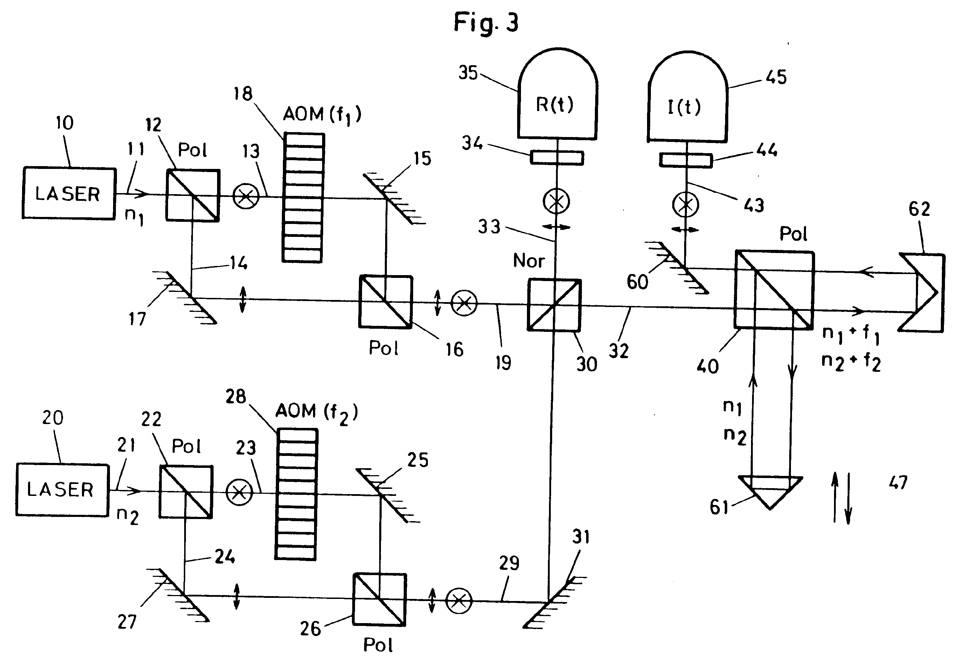

Das in Fig. 3 dargestellte Prinzipschema einer zweiten Ausbildung des optischen Teils der erfindungsgemässen Vorrichtung weicht in folgenden Merkmalen von der bereits beschriebenen ersten Ausbildung ab. Anstelle der Spiegel 41 und 42 wird in Fig. 3 gezeigt, dass auch Reflexionsprismen oder Tripelprismen, wie bei 61 dargestellt, und Tripelspiegel oder entsprechend ausgebildete, mit reflektierenden Flächen versehene Gebilde, wie bei 62 dargestellt, verwendet werden können.

Wenn, wie in Fig. 3 dargestellt, in den beiden Armen des Michelson-Interferometers die Wege der Teilstrahlen vor der Spiegelung bzw. Streuung am Ende des jeweiligen Armes von den Wegen der Teilstrahlen nach der Spiegelung bzw. Streuung räumlich getrennt sind, wird die Drehung der Polarisation durch die jeweilige Viertelwellenplatte 48, 49 nicht benötigt, daher sind diese Viertelwellenplatten 48, 49 in Fig. 3 nicht eingezeichnet. Bei relativ kleiner räumlicher Trennung der Wege der Teilstrahlen kann das am Eingang des Michelson-Interferometers verwendete optische Element 40 auch am Ausgang verwendet werden, wobei es zweckmässig sein kann, wie in Fig. 3 dargestellt die aus dem Michelson-Interferometer austretenden Lichstrahlen von einem Spiegel 60 umlenken zu lassen. Bei grösserer räumlicher Trennung der Wege der Teilstrahlen kann auf nicht dargestellte Weise am Ausgang des Michelson-Interferometers ein anderes polarisierendes optisches Element als das am Eingang angeordnete optische Element 40 verwendet werden, wobei diese beiden optischen Elemente im wesentlichen einander gleich sind.

Wie erwähnt ist bei der in Fig. 1 und 3 dargestellten Ausbildung am Ende jeden Armes des Michelson-Interferometers je ein reflektierendes Element 41, 42 bzw. 61, 62 angeordnet. Anstelle des beweglichen Elementes 41 bzw. 61 könnte im Messarm ein beliebiges retroreflektierendes Element verwendet werden, beispielsweise eine Glaskugel oder eine Suspension von Glaskügelchen in einem Kunststoff oder noch, in Erweiterung dieser Variante, ein in die Lichteinfallrichtung zurückstreuendes optisches Element wie ein sogenanntes reflektierendes Klebeband.

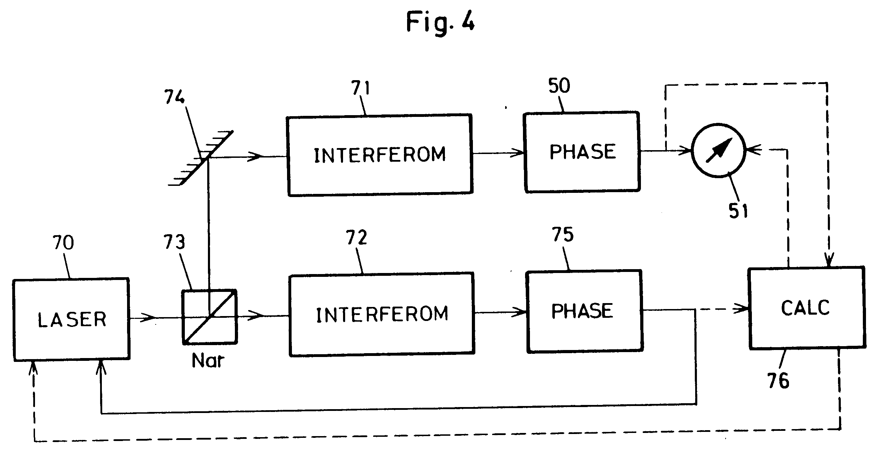

In Fig. 4 wird eine Weiterbildung der erfindungsgemässen Vorrichtung gezeigt. Die gesamte bisher beschriebene Vorrichtung umfasst zusätzlich noch einmal die gleichen Elemente bis auf die Lasereinrichtung oder Lasereinrichtungen, welche in gleicher Anzahl bleiben wie vorhin. Die erwähnten Elemente sind also mit Ausnahme der Lasereinrichtung oder Lasereinrichtungen im Doppel vorhanden und werden in Fig. 4 gesamthaft als jeweilige Vorrichtung 71 und 72 bezeichnet. Zur Klarheit der weiter unten folgenden Erläuterung werden die entsprechenden Einrichtungen zur Messung der Phasendifferenz separat dargestellt und mit 50 bzw. 75 bezeichnet. Auch die Anzeige 51 wird dargestellt. In der einen Vorrichtung 71 umfasst das Michelson-Interferometer die variable Interferenzstrecke mit dem (entsprechend dem Pfeilepaar 47 beweglichen) Spiegel 41 oder mit dessen Äquivalent 61. In der anderen Vorrichtung 72 umfasst das Michelson-Interferometer nur stabile Referenzstrecken. Diese können beispielsweise als optische Faser von konstanter optischer Länge ausgebildet sein.

In Fig. 4 ist eine einzige Lasereinrichtung 70 dargestellt. Diese Lasereinrichtung 70 kann aus einer einzigen Laserlichtquelle bestehen, die fähig ist, gleichzeitig die beiden Laserstrahlen der Frequenzen $n_1$ und $n_2$ zu erzeugen: wie bereits im Zusammenhang mit Fig. 1 beschrieben wurde, kann es sich beispielsweise um einen He-Ne-Laser oder einen Ar-Laser unter Ausnutzung von verschiedenen Linien oder von zwei Modi derselben Linie handeln. Die Lasereinrichtung 70 kann aber auch in Fig. 4 stellvertretend für zwei separate Laserlichtquellen, die unter anderem Laserdioden sein können, verstanden werden. Wichtig ist, dass die Lasereinrichtung 70 fähig ist, einen Lichtstrahl als Vereinigung von Teilstrahlen der Frequenzen $n_1$ und $n_2$ zu erzeugen.

Das Laserlicht der Lasereinrichtung 70 wird durch ein als nichtpolarisierender Halbspiegel wirkendes optisches Element 73, das im dargestellten Beispiel ein nichtpolarisierender Strahlenteiler in der Gestalt eines Würfelprismas ist, in zwei Teilstrahlen geteilt. Nach geeigneter Umlenkung beispielsweise eines dieser Teilstrahlen durch den Spiegel 74, werden diese Teilstrahlen der jeweiligen Vorrichtung 71, 72 zugeführt. Diese Teilstrahlen sind also in Fig. 4 stellvertretend für die beiden Lichtstrahlen 11 und 21 der Fig. 1 oder 3.

Die Vorrichtung 72 mit den stabilen Referenzstrecken dient zur Korrektur der Messwerte und/oder zur Stabilisierung der Laserlichtquelle der Lasereinrichtung 70.

Zur Korrektur der in der Vorrichtung 71 gemessenen, an der Phasenmesseinrichtung 50 gebildeten und an der Anzeige 51 angegebenen Phasendifferenz kann eine Rückführung der in der Vorrichtung 72 gemessenen und an der Phasenmesseinrichtung 75 gebildeten Phasendifferenz auf einen Rechner 76 erfolgen. Die im Rechner 76 berechnete Korrektur kann entweder einer Bedienungsperson durch Anzeige mitgeteilt oder, wie es in Fig. 4 mit einer gestrichelten Linie dargestellt wird, zur Beeinflussung der Anzeige 51 auf diese rückgeführt werden.

Zur Stabilisierung der Laserlichtquelle der Lasereinrichtung 70 kann in einer Steuerungsschleife eine Rückführung der in der Vorrichtung 72 gemessenen und an der Phasenmesseinrichtung 75 gebildeten Phasendifferenz auf die Lasereinrichtung 70 erfolgen. Wie eingangs erwähnt, ist die Verwendung eines Phasensignals zur Stabilisierung einer Laserfrequenz beispielsweise aus WO-85/04009 bekannt, daher braucht die vorstehend erwähnte Steuerungsschleife hier nicht näher beschrieben zu werden. Bei Verwendung von Laserdioden erfolgt die Stabilisierung der Laserfrequenz zweckmässigerweise über die Änderung des Anregungsstromes.

Das den beschriebenen Vorrichtungen zu Grunde liegende Verfahren kann wie folgt zusammengefasst werden (die einzelnen Schritte des Verfahrens sind bei der Beschreibung der Vorrichtungen bereits erläutert worden).

Je ein Laserlichtstrahl der Frequenz $n_1$ bzw. $n_2$ werden in zwei zueinander gekreuzt polarisierte Teilstrahlen geteilt.

Die Frequenz des einen Teilstrahls wird um die Frequenz $f_1$ bzw. $f_2$ verschoben. Somit entsteht je ein Teilstrahlenpaar $n_1$, $n_1+f_1$ bzw. $n_2$, $n_2+f_2$. Bei Verwendung von Ar-Lasern unter Benutzung von zwei Modi gilt etwa $n_1-n_2 = 6\,\text{GHz}$, und bei Verwendung eines $CO_2$-Lasers unter Benutzung von zwei Rotationsübergängen gilt etwa $n_1-n_2 = 50\,\text{GHz}$. Mit Laserdioden erreicht man beispielsweise $n_1-n_2 = 30\,\text{GHz}$. Bei Verwendung von akustooptischen Modulatoren sind beispielsweise $f_1 = 40,0\,\text{MHz}$ und $f_2 = 40,1\,\text{MHz}$ zweckmässig.

Beide Teilstrahlenpaare werden vereinigt, dann gemeinsam über ein Michelson-Interferometer und schliesslich über einen Polarisator zu einem Fotodetektor geführt. Die Teilstrahlen interferieren vor dem Fotodetektor miteinander, wobei Schwebungen der Frequenz $f_1$ bzw. $f_2$ entstehen, die vom Fotodektor erfasst werden.

Ausserdem wird ein Anteil der vereinigten Teilstrahlen vor ihrem Eingang in das Michelson-Interferometer zu einem anderen Fotodetektor abgezweigt. Auch hier interferieren die Teilstrahlen vor dem Fotodetektor miteinander, wobei Schwebungen der Frequenz $f_1$ bzw. $f_2$ entstehen, die von diesem anderen Fotodektor erfasst werden.

Die Gleichungen, welche die Signale $I(t)$ und $R(t)$ der beiden Fotodetektoren beschreiben, sind von der Form

$$I(t) = a_0 + a_1\cos(2\pi f_1 t + \phi_1) + a_2\cos(2\pi f_2 t + \phi_2)$$
$$R(t) = a_0 + a_1\cos(2\pi f_1 t) + a_2\cos(2\pi f_2 t)$$

worin $\phi_1$ und $\phi_2$ die optische Phasenverschiebung der Signale auf den Frequenzen $n_1$ und $n_2$ beim Durchgang durch das Interferometer bedeuten. Bei einer Wegdifferenz L und einer Lichtgeschwindigkeit c im Interferometer beträgt diese Phasenverschiebung

$$\phi_1 = 4\pi n_1 L/c$$

5

$$\phi_2 = 4\pi n_2 L/c$$

Wie ersichtlich sind diese Phasen von den jeweiligen Frequenzen $n_1$, $n_2$ abhängig. Daher werden die Signale der beiden Fotodetektoren jeweils nach dem quadrat ihrer Amplitude demoduliert. Es entsteht dabei je ein demoduliertes Signal der Frequenz $f_1$-$f_2$. Die Gleichungen, welche diese Signale beschreiben, sind von der Form

$$I^2(t) = a_0^2 + \ldots + a_1 a_2 \cos[(2\pi(f_1-f_2)t + (\phi_1-\phi_2)]$$
$$R^2(t) = a_0^2 + \ldots + a_1 a_2 \cos[(2\pi(f_1-f_2)t]$$

Somit kann die Phasendifferenz $\phi_1$-$\phi_2$ direkt am Wert von $I^2(t)$ bei der Frequenz $f_1$-$f_2$ gemessen werden, wobei $R^2(t)$ die Phasenreferenz (Nullwert) liefert. Man erhält:

$$\phi_1-\phi_2 = 4n(n_1-n_2)L/c$$

Diese Phasendifferenz variiert linear mit den Änderungen des optischen Weges, und sie ist nur von der Frequenzdifferenz $n_1$-$n_2$, nicht aber direkt von den jeweiligen Frequenzen $n_1$, $n_2$ abhängig. Man braucht also die Frequenzen $n_1$, $n_2$ nicht einzeln, sondern nur deren Differenz zu stabilisieren. Mit den als Beispiel angegebenen Werten gilt $f_1$-$f_2$ = 100 KHz, und die Phasendifferenz $\phi_1$-$\phi_2$ kann mit einer Auflösung von einigen Tausendstel Radian gemessen werden. Damit ist eine Auflösung von einigen Zehn Mikrometer in einem Messbereich bis zu einigen Hundert Millimeter erreichbar.

Zur Stabilisierung der Frequenzen $n_1$ und $n_2$ des Laserlichts oder direkt der Frequenzdifferenz $n_1$-$n_2$ kann man das Verfahren mit einer einzigen Laserlichtquelle simultan in zwei Michelson-Interferometern ausführen. Das eine Michelson-Interferometer enthält dann die variable Interferenzstrecke und das andere nur stabile Referenzstrecken. Die aus dem Michelson-Interferometer mit den stabilen Referenzstrecken gewonnene Phasendifferenz wird in einer Steuerungsschleife auf die Laserlichtquelle rückgekoppelt. bestelle der Steuerungsschleife kann ein Rechner eingesetzt werden, der den Messwert direkt korrigiert oder einer Bedienungsperson einen Korrekturwert liefert.

Das Verfahren ist zur Bestimmung von Positionen oder von Distanzen als Abstand zweier Positionen anwendbar. Zur Behebung der inhärenten Ungewissheit der Distanzmessung um eine Anzahl von Wellenlängen der Frequenzdifferenz $n_1$-$n_2$ kann die zu messende Distanz abgefahren werden, oder man kann die Frequenz eines der Laserlichtstrahlen als Funktion der Zeit ändern, während man gleichzeitig das Zeitintegral der gemessenen Phasendifferenz bildet. Dieses Zeitintegral variiert dann linear mit der gemessenen Position. Eine entsprechende Rechnereinrichtung kann sowohl die Frequenzänderung steuern als auch das Zeitintegral bilden sowie gegebenfalls zur Anzeige liefern: diese Rechnereinrichtung kann beispielsweise der Rechner 76 sein, der zu diesen Zwecken (wie in Fig. 4 mit einer gestrichelten Linie dargestellt) mit der Phasenmesseinrichtung 50, der Lasereinrichtung 70 (oder 10 und 20 in Fig. 1 und 3) und gegebenenfalls mit der Anzeige 51 verbunden ist.

Das Verfahren ermöglicht, Messungen in Bruchteilen von Sekunden durchzuführen, ist also für industrielle Anwendungen gut geeignet.

Das erfindungsgemässe Verfahren, dessen erfindungsgemässe Anwendung und die erfindungsgemässe Vorrichtung sind nicht auf die beschriebenen Beispiele beschränkt, welche nur der Erläuterung und Veranschaulichung der Erfindung dienen. Vielmehr erstreckt sich die Erfindung auf alle Varianten und Aequivalente, die von den Patentansprüchen umfasst werden.

## Patentansprüche

1. Verfahren zur Messung von Änderungen einer variablen Interferenzstrecke eines Interferometers unter Anwendung von Zwei-Wellenlängen-Interferometrie und optischen Heterodynverfahren, wobei
   – ein Laserlichtstrahl der Frequenz $n_1$ in zwei zueinander gekreuzt polarisierte Teilstrahlen geteilt wird, von denen der eine einer Frequenzverschiebung um die Frequenz $f_1$ unterzogen wird, um einen Teilstrahl der Frequenz $n_1$+$f_1$ zu ergeben, während die Frequenz $n_1$ des anderen Teilstrahls unverändert bleibt, so dass ein Teilstrahlenpaar $n_1$, $n_1$+$f_1$ gebildet wird,
   – die Teilstrahlen des Teilstrahlenpaares $n_1$, $n_1$+$f_1$ gemeinsam über ein Michelson-Interferometer und dann über einen Polarisator zu einem Fotodetektor geführt werden, so dass die beiden Teilstrahlen vor dem Fotodetektor miteinander interferieren und eine Schwebung der Frequenz $f_1$ entsteht, die vom Fotodetektor erfasst wird,
   dadurch gekennzeichnet, dass
   – ein Laserlichtstrahl der Frequenz $n_2$ in zwei gekreuzt polarisierte Teilstrahlen geteilt wird, von denen der eine einer Frequenzverschiebung um die Frequenz $f_2$ unterzogen wird, um einen Teilstrahl der Frequenz $n_2$+$f_2$ zu ergeben, während die Frequenz $n_2$ des anderen Teilstrahls unverändert bleibt, so dass ein Teil-

strahlenpaar $n_2$, $n_2+f_2$ gebildet wird,

– die Teilstrahlen des Teilstrahlenpaares $n_1$, $n_1+f_1$ und die Teilstrahlen des Teilstrahlenpaares $n_2$, $n_2+f_2$ vereinigt, dann gemeinsam über denselben Michelson-Interferometer und schliesslich über denselben Polarisator zu demselben Fotodetektor geführt werden, so dass auch die beiden Teilstrahlen des Teilstrahlenpaares $n_2$, $n_2+f_2$ vor dem Fotodetektor miteinander interferieren und zusätzlich zur Schwebung der Frequenz $f_1$ zumindest eine Schwebung der Frequenz $f_2$ entsteht, die vom Fotodektor erfasst wird,

– ausserdem die vier vereinigten Teilstrahlen vor ihrem Eingang in das Michelson-Interferometer über ein als nichtpolarisierender Halbspiegel wirkendes optisches Element gefürt werden, das einen Anteil dieser Teilstrahlen über einen anderen Polarisator zu einem anderen Fotodetektor umlenkt, so dass die vier vereinigten Teilstrahlen vor diesem anderen Fotodetektor miteinander interferieren und Schwebungen entstehen, von denen zumindest diejenigen der Frequenz $f_1$ und der Frequenz $f_2$ von diesem anderen Fotodektor erfasst werden,

– die Signale der beiden Fotodetektoren jeweils nach dem Quadrat ihrer Amplitude demoduliert werden, um je ein demoduliertes Signal der Frequenz $f_1-f_2$ zu ergeben, und

– die Phasendifferenz zwischen den beiden demodulierten Signalen gemessen wird, welche Phasendifferenz linear mit den Änderungen des optischen Wegs variiert.

2. Verfahren nach Anspruch 1, dadurch gekennzeichnet, dass der Laserlichtstrahl der Frequenz $n_1$ und der Laserlichtstrahl der Frequenz $n_2$ von je einer separaten Laserlichtquelle bezogen werden.

3. Verfahren nach Anspruch 1, dadurch gekennzeichnet, dass der Laserlichtstrahl der Frequenz $n_1$ und der Laserlichtstrahl der Frequenz $n_2$ von einer und derselben Laserlichtquelle bezogen werden, die fähig ist, mindestens die beiden Laserstrahlen der Frequenz $n_1$ und $n_2$ zu erzeugen.

4. Verfahren nach Anspruch 1, dadurch gekennzeichnet, dass man es unter Verwendung derselben Laserstrahlen einer einzigen Laserlichtquelle simultan in zwei Michelson-Interferometern ausführt, wobei das Michelson-Interferometer der ersten Ausführung die variable Interferenzstrecke und das Michelson-Interferometer der zweiten Ausführung nur stabile Referenzstrecken umfasst, und dass man den Messwert derjenigen Phasendifferenz, welche in der zweiten Ausführung gemessen wird, in einer Steuerungsschleife auf die Laserlichtquelle zur Stabilisierung der Frequenzen $n_1$ und $n_2$ des Laserlichts rückkoppelt.

5. Verfahren nach Anspruch 1, dadurch gekennzeichnet, dass man es unter Verwendung derselben Laserstrahlen einer einzigen Laserlichtquelle simultan in zwei Michelson-Interferometern ausführt, wobei das Michelson-Interferometer der ersten Ausführung die variable Interferenzstrecke und das Michelson-Interferometer der zweiten Ausführung nur stabile Referenzstrecken umfasst, und dass man den Messwert derjenigen Phasendifferenz, welche in der zweiten Ausführung gemessen wird, einem Rechner zur Korrektur des Messwerts der in der ersten Ausführung gemessenen Phasendifferenz zuleitet.

6. Verfahren nach Anspruch 4 oder 5, dadurch gekennzeichnet, dass in mindestens einer Interferenzstrecke des Michelson-Interferometers der zweiten Ausführung eine optische Faser von vorbestimmter und konstanter optischer Länge verwendet wird.

7. Verfahren nach Anspruch 1, dadurch gekennzeichnet, dass die Demodulation des Signals mindestens eines Fotodetektors nach dem quadrat der Amplitude dieses Signals durch Mischen des Signals mit sich selbst erfolgt.

8. Verfahren nach Anspruch 1, dadurch gekennzeichnet, dass die Demodulation des Signals mindestens eines Fotodetektors nach dem quadrat der Amplitude dieses Signals durch Gleichrichten und Glätten des Signals erfolgt.

9. Anwendung des Verfahrens nach Anspruch 1 zur Bestimmung von Positionen oder von Distanzen als bestand zweier Positionen.

10. Anwendung nach Anspruch 9, dadurch gekennzeichnet, dass man, zur Behebung der einer Anzahl von halben Wellenlängen der Differenzfrequenz $n_1-n_2$ entsprechenden Ungewissheit der Distanzmessung, einen Spiegel des Michelson-Interferometers entlang der zu messenden Distanz bewegt und während dieser Bewegung das Zeitintegral der gemessenen Phasendifferenz bildet, welches Zeitintegral linear mit der gemessenen Position variiert.

11. Anwendung nach Anspruch 9, dadurch gekennzeichnet, dass man, zur Behebung der einer Anzahl von halben Wellenlängen der Differenzfrequenz $n_1-n_2$ entsprechenden Ungewissheit der Distanzmessung, die Frequenz mindestens eines der Laserlichtstrahlen als Funktion der Zeit ändert und während dieser linderung das Zeitintegral der gemessenen Phasendifferenz bildet, welches Zeitintegral linear mit der gemessenen Position variiert.

12. Vorrichtung zur Ausübung des Verfahrens nach Anspruch 1, umfassend:

– eine Lasereinrichtung (10,20) zur Erzeugung eines Laserlichtstrahls (11) der Frequenz $n_1$,

– ein erstes, dem Laserlichtstrahl (11) der Frequenz $n_1$ zugeordnetes, als polarisierender Halbspiegel wirkendes optisches Element (12) zur Teilung des Laserlichtstrahls in ein Paar von gekreuzt polarisierten Teil-

strahlen der Frequenz $n_1$ (13,14),

– einen auf einem der Teilstrahlen (13) des Teilstrahlenpaares der Frequenz $n_1$ angeordneten Modulator (18) zur Verschiebung der Frequenz dieses Teilstrahls um die Frequenz $f_1$ unter Bildung eines Teilstrahlenpaares der Frequenzen $n_1$, $n_1+f_1$,

– ein Michelson-Interferometer mit einem optischen Eingang (40) und einem optischen Ausgang (40), und

– einen ersten Fotodetektor (35), vor dem ein Polarisator (34) angeordnet ist, **dadurch gekennzeichnet**, **dass** durch die Lasereinrichtung (10,20) ein zweiter Laserlichtstrahl (21) der Frequenz $n_2$ erzeugbar ist, und dass die Vorrichtung ferner umfasst:

– ein zweites, dem Laserlichtstrahl der Frequenz $n_2$ zugeordnetes, als polarisierender Halbspiegel wirkendes optisches Element (22) zur Teilung dieses zweiten Laserlichtstrahls in ein Paar von gekreuzt polarisierten Teilstrahlen der Frequenz $n_2$ (23,24),

– einen auf einem der Teilstrahlen (23) des Teilstrahlenpaares der Frequenz $n_2$ angeordneten Modulator (28) zur Verschiebung der Frequenz dieses Teilstrahls um die Frequenz $f_2$ unter Bildung eines Teilstrahlenpaares $n_2$, $n_2+f_2$,

– ein erstes Paar Umlenkspiegel (15,17) und ein drittes als polarisierender Halbspiegel wirkendes optisches Element (16) zur Vereinigung (19) der Teilstrahlen des Teilstrahlenpaares $n_1$, $n_1+f_1$ sowie ein zweites Paar Umlenkspiegel (25,27) und ein viertes als polarisierender Halbspiegel wirkendes optisches Element (26) zur Vereinigung (29) der Teilstrahlen des Teilstrahlenpaares $n_2$, $n_2+f_2$,

– einen zweiten Fotodetektor (45), vor dem ein Polarisator (44) angeordnet ist,

– ein als nichtpolarisierender Halbspiegel wirkendes optisches Element (30) zur Aufteilung der Teilstrahlen (19) des Teilstrahlenpaares $n_1$, $n_1+f_1$ und der Teilstrahlen (29) des Teilstrahlenpaares $n_2$, $n_2+f_2$ in je einen Messlichtstrahl (32) und je einen Referenzlichtstrahl (33) und zur Umlenkung der jeweiligen Referenzlichtstrahlen auf den ersten Fotodetektor (35) und der jeweiligen Messlichtstrahlen auf den optischen Eingang (40) des Michelson-Interferometers, während der zweite Fotodetektor (45) in bezug auf den Ausgang des Michelson-Interferometers derart angeordnet ist, dass die am optischen Ausgang (40) des Michelson-Interferometers austretenden Messlichtstrahlen (43) auf den zweiten Fotodetektor (45) gerichtet sind,

– je einem Fotodetektor zugeordnete Einrichtungen (36,46) zur Demodulation eines Signals des Fotodetektors nach dem Quadrat der Amplitude dieses Signals und zur Erzeugung eines entsprechenden demodulierten Signals, und

– eine Einrichtung (50) zur Messung der Phasendifferenz zwischen den beiden demodulierten Signalen.

13. Vorrichtung nach Anspruch 12, dadurch gekennzeichnet, dass die Lasereinrichtung zwei separate Laserlichtquellen (10,20) umfasst.

14. Vorrichtung nach Anspruch 13, dadurch gekennzeichnet, dass die Laserlichtquellen Laserdioden sind.

15. Vorrichtung nach Anspruch 12, dadurch gekennzeichnet, dass die Lasereinrichtung (70) eine einzige Laserlichtquelle umfasst, die fähig ist, mindestens zwei Laserstrahlen verschiedener Frequenz zu erzeugen.

16. Vorrichtung zur Ausübung des Verfahrens nach Anspruch 1, umfassend:

– eine Lasereinrichtung (70) zur Erzeugung eines Laserlichtstrahls der Frequenzen $n_1$ und $n_2$,

– ein als nichtpolarisierender Halbspiegel wirkendes optisches Element (73) zur Teilung des Laserlichtstrahls in einen durchgehenden und einen umgelenkten Laserlicht-Teilstrahl,

– eine ersten Ausführung, in die der umgelenkte Laserlicht-Teilstrahl geführt wird, und

– eine zusätzliche zweite Ausführung, in die der durchgehende Laserlicht-Teilstrahl geführt wird, wobei die beiden Ausführungen bis auf die Lasereinrichtung (70) wie im Anspruch 12 definiert und einander identisch ausgebildet sind, und wobei das Michelson-Interferometer der ersten Ausführung (71) die variable Interferenzstrecke und das Michelson-Interferometer der zweiten Ausführung (72) nur stabile Referenzstrecken umfasst.

17. Vorrichtung nach Anspruch 16, dadurch gekennzeichnet, dass mindestens eine Interferenzstrecke des zusätzlichen Michelson-Interferometers (72) als optische Faser von konstanter optischer Länge ausgebildet ist.

18. Vorrichtung nach Anspruch 16, dadurch gekennzeichnet, dass in einer Steuerungsschleife eine Rückführung des Wertes derjenigen Phasendifferenz (75), welche in der zusätzlichen Teilausführung (72,75) der Vorrichtung gemessen wird, auf die Lasereinrichtung (70) zur Stabilisierung der Laserlichtquelle vorgesehen ist.

19. Vorrichtung nach Anspruch 16, dadurch gekennzeichnet, dass eine Rückführung des Wertes derjenigen Phasendifferenz (75), welche in der zusätzlichen Teilausführung (72,75) der Vorrichtung gemessen wird, auf einen Rechner (76) zur korrektur des auf einer Anzeige (51) angegebenen Messwerts der in der ersten Ausführung (71) gemessenen Phasendifferenz vorgesehen ist.

20. Vorrichtung nach Anspruch 12, dadurch gekennzeichnet, dass mindestens eine der Einrichtungen zur Demodulation (36,46) als Einrichtung zum Mischen des Signals mit sich selbst ausgebildet ist.

21. Vorrichtung nach Anspruch 12, dadurch gekennzeichnet, dass mindestens eine der Einrichtungen zur Demodulation (36,46) als Einrichtung zum Gleichrichten und Glätten des Signals ausgebildet ist.

22. Vorrichtung nach Anspruch 12, dadurch gekennzeichnet, dass ein Rechner (76) mit der Einrichtung (50) zur Messung der Phasendifferenz, der Lasereinrichtung (10,20;70) und gegebenenfalls einer Anzeige (51) verbunden ist und dazu bestimmt und programmiert ist, zur Behebung der einer Anzahl von halben Wellenlängen der Differenzfrequenz $n_1$-$n_2$ entsprechenden Ungewissheit der Distanzmessung die Frequenz mindestens eines der Laserlichtstrahlen als Funktion der Zeit zu ändern und während dieser linderung das Zeitintegral der gemessenen Phasendifferenz zu bilden, welches Zeitintegral linear mit der gemessenen Position variiert und gegebenenfalls der Anzeige (51) zugeleitet wird.

## Claims

1. Method for measuring changes of a variable interference path of an interferometer using two-wavelength interferometry and an optical heterodyne process, wherein
   – a laser light beam of frequency $n_1$ is divided into two part beams cross-polarized with respect to each other, whereof one is subjected to a frequency shift by the frequency $f^1$ so as to produce a part beam with the frequency of $n_1$+$f_1$, while the frequency $n_1$ of the other part beam remains unchanged so that a part beam pair $n_1$, $n_1$+$f_1$ is formed,
   – the part beams of the part beam pair $n_1$, $n_1$+$f_1$ are jointly passed via a Michelson interferometer and then via a polarizer to a photodetector, so that the two part beams mutually interfere ahead of the photodetector and a beat of frequency $f_1$ is produced which is picked up by the photodetector,
   characterized in that
   – a laser light beam of frequency $n_2$ is divided into two cross-polarized part beams, whereof one is subjected to a frequency shift by the frequency $f_2$ so as to produce a part beam of frequency $n_2$+$f_2$, while the frequency $n_2$ of the other part beam remains unchanged so that a part beam pair $n_2$, $n_2$+$f_2$ is formed,
   – the part beams of the part beam pair $n_1$, $n_1$+$f_1$ and the part beams of the part beam pair $n_2$, $n_2$+$f_2$ are combined, then passed jointly via the same Michelson interferometer and finally via the same polarizer to the same photodetector, so that the two part beams of the part beam pair $n_2$, $n_2$+$f_2$ also mutually interfere ahead of the photodetector and in addition to the beat of frequency $f_1$, at least one beat of frequency $f_2$ is produced which is picked up by the photodetector,
   – before entering the Michelson interferometer, the four combined part beams are, moreover, passed over an optical element acting as a nonpolarizing semireflecting mirror which deflects a proportion of these part beams via another polarizer to another photodetector so that the four combined part beams mutually interfere ahead of this other photodetector and beats are produced, whereof at least those of frequency $f_1$ and of frequency $f_2$ are picked up by this other photodetector,
   – the signals of the two photodetectors are respectively demodulated according to the square of their amplitude, so as to produce each a demodulated signal of frequency $f_1$-$f_2$, and
   – the phase difference between the two demodulated signals is measured, which phase difference varies linearly with changes in the optical path.

2. Method according to claim 1, characterized in that the laser light beam of frequency $n_1$ and the laser light beam of frequency $n_2$ are each obtained from a separate laser light source.

3. Method according to claim 1, characterized in that the the laser light beam of frequency $n_1$ and the laser light beam of frequency $n_2$ are obtained from the same laser light source which is capable of generating at least the two laser light beams of frequencies $n_1$ and $n_2$.

4. Method according to claim 1, characterized in that it is operated in two Michelson interferometers simultaneously by using the same laser beams of a single laser light source, the Michelson interferometer of the first configuration comprising the variable interference path and the Michelson interferometer of the second configuration comprising only stable reference paths and that the measured value of the phase difference measured in the second configuration is fed back in a control loop to the laser light source so as to stabilize the frequencies $n_1$ and $n_2$ of the laser light.

5. Method according to claim 1, characterized in that it is operated in two Michelson interferometers simultaneously by using the same laser beam of a single laser light source, the Michelson interferometer of the first configuration comprising the variable interference path and the Michelson interferometer of the second configuration comprising only stable reference paths and that the measured value of the phase difference measured in the second configuration is passed to a computer for correcting the measured value of the phase difference measured in the first configuration.

6. Method according to claim 4 or 5, characterized in that in at least one interference path of the Michelson interferometer of the second configuration, an optical fibre of a predetermined and constant optical length is used.

7. Method according to claim 1, characterized in that the demodulation of the signal of at least one photodetector according to the square of the amplitude of this signal is effected by mixing this signal with itself.

8. Method according to claim 1, characterized in that the demodulation of the signal of at least one photodector according to the square of the amplitude of this signal is effected by the rectifying and smoothing of the signal.

9. Application of the method according to claim 1 for the determination of positions or distances as the interspacing of two positions.

10. Application according to claim 9, characterized in that, for eliminating the uncertainty of the distance measurement corresponding to a number of half-wave lengths of the difference frequency $n_1 - n_2$, a mirror of the Michelson interferometer is moved along the distance to be measured and that during this movement, the time integral of the measured phase difference is formed, which time integral varies linearly with the measured position.

11. Application according to claim 9, characterized in that for eliminating the uncertainty of the distance measurement corresponding to a number of half-wave lengths of the difference frequency $n^1 - n_2$, the frequency of at least one of the laser light beams is modified as a function of time and that during this modification, the time integral of the measured phase difference is formed, which time integral varies linearly with the measured position.

12. Apparatus for operating the method according to claim 1, comprising :
– a laser appliance (10, 20) for generating a laser light beam (11) of frequency $n_1$,
– a first optical element (12) acting as a polarizing semireflecting mirror for dividing the laser light beam into a pair of cross-polarized part beams (13, 14) of frequency $n_1$,
– a modulator (18) arranged on one of the part beams (13) of the part beam pair of frequency $n_1$ for shifting the frequency of this part beam by the frequency $f_1$, thus forming a part beam pair of frequencies $n_1$, $n_1+f_1$
– a Michelson interferometer with an optical input (40) and an optical output (40), and
– a first photodetector (35) ahead of which there is arranged a polarizer (34),
characterized in that a second laser light beam (21) of frequency $n_2$, can be generated by the laser appliance (10, 20) and that the appliance moreover comprises:
– a second optical element (22) assigned to the laser light beam of frequency $n_2$, acting as a polarizing semireflecting mirror for dividing this second laser light beam into a pair of cross-polarized part beams (23, 24) of frequency $n_2$,
– a modulator (28) arranged on one of the part beams (23) of the part beam pair of frequency $n_2$ for shifting the frequency of this part beam by the frequency $f_2$ thus forming a part beam pair of frequencies $n_2$, $n_2+f_2$,
– a first pair of deflecting mirrors (15, 17) and a third optical element (16) acting as a polarizing semireflecting mirror for combining (19) the part beams of the part beam pair $n_1$, $n_1+f_1$ as well as a second pair of deflecting mirrors (25, 27) and a fourth optical element (26) acting as a polarizing semireflecting mirror for combining (29) the part beams of the part beam pair $n_2$, $n_2+f_2$,
– a second photodetector (45) ahead of which there is arranged a polarizer (44),
– an optical element (30) acting as a nonpolarizing semireflecting mirror for dividing the part beams (19) of the part beam pair $n_1$, $n_1+f_1$ and the part beams (29) of the part beam pair $n_2$, $n_2+f_2$ into one measuring light beam (32) each and one reference light beam (33) each, and for deflecting the respective reference light beams to the first photodetector (35) and the respective measuring light beams of the optical input (40) of the Michelson interferometers, whilst the second photodetector (45) is arranged relative to the output of the Michelson interferometer in such a way that the measuring light beams (43) emerging at the optical output (40) of the Michelson interferometer are directed onto the second photodetector (45),
– devices (36, 46) assigned to one photodetector each for demodulating a signal of the photodetector according to the square of the amplitude of this signal and for producing a signal demodulated accordingly, and
– a device (50) for measuring the phase difference between the two demodulated signals.

13. Apparatus according to claim 12, characterized in that the laser appliance comprises two separate laser light sources (10, 20).

14. Apparatus according to claim 13, characterized in that the laser light sources are laser diodes.

15. Apparatus according to claim 12, characterized in that the laser appliance (70) comprises a single laser light source which is capable of generating at least two laser beams of different frequencies.

16. Apparatus for operating the method according to claim 1, comprising :
– a laser appliance (70) for generating a laser light beam of frequencies $n_1$ and $n_2$,
– an optical element (73) acting as a nonpolarizing semireflecting mirror for dividing the laser light beam into a traversing and a deflected laser light part beam,
– a first configuration into which the deflected laser light part beam is passed, and
– an additional second configuration into which the traversing laser light part beam is passed,
wherein the two configurations are designed, with the exception of the laser appliance (70), as defined in claim 12 and are identical with each other, and
wherein the Michelson interferometer of the first configuration (71) comprises the variable interference path and the Michelson interferometer of the second configuration (72) comprises only stable reference paths.

17. Apparatus according to claim 16, characterized in that at least one interference path of the additional Michelson interferometer (72) is designed as an optical fibre of constant optical length.

18. Apparatus according to claim 16, characterized in that for stabilizing the laser light source, provision is made in a control loop for a feedback to the laser appliance (70) of the value of that phase difference (75) which is measured in the additional part configuration (72, 75) of the apparatus.

19. Apparatus according to claim 16, characterized in that for correcting the measured value indicated on a display (51), of the phase difference measured in the first configuration (71), provision is made for a feedback to a computer (76) of the value of that phase difference (75) which is measured in the additional part configuration (72, 75) of the apparatus,

20. Apparatus according to claim 12, characterized in that at least one of the devices (36, 46) for the demodulation is designed as a device for the mixing of the signal with itself.

21. Apparatus according to claim 12, characterized in that at least one of the devices (36, 46) for the demodulation is designed as a device for the rectifying and smoothing of the signal.

22. Apparatus according to claim 12, characterized in that a computer (76) is connected to the device (50) for measuring the phase difference, to the laser appliance (10, 20; 70) and if required, to a display (51) and is, for the purpose of eliminating the uncertainty of the distance measurement corresponding to a number of half-wave lengths of the difference frequency $n^1 - n_2$, intended and programmed to modify the frequency of at least one of the laser light beams as a function of time and to form during this modification the time integral of the measured phase difference, which time integral varies linearly with the measured position and is passed to the display (51), if required.

## Revendications

1. Procédé pour mesurer des modifications d'une distance d'interférence variable d'un interféromètre avec emploi de l'interférométrie à deux longueurs d'onde et de procédés hétérodynes optiques, procédé dans lequel
– un rayon laser de la fréquence $n_1$ est divisé en deux rayons partiels de polarisation croisée, dont l'un est soumis à un décalage de fréquence par la fréquence $f_1$ en vue de l'obtention d'un rayon partiel de la fréquence $n_1+f_1$, tandis que la fréquence $n_1$ de l'autre rayon partiel reste inchangée, ce qui entraîne la formation d'une paire de rayons partiels $n_1$, $n_1+f_1$,
– les rayons partiels de la paire de rayons partiels $n_1$, $n_1+f_1$ sont amenés ensemble vers un détecteur photoélectrique en passant par un interféromètre Michelson et ensuite par un polarisateur, de manière à ce que les deux rayons partiels interfèrent devant le détecteur photoélectrique, provoquant un battement de la fréquence $f_1$ qui est saisi par le détecteur photoélectrique,
caractérisé en ce que
– un rayon laser de la fréquence $n_2$ est divisé en deux rayons partiels de polarisation croisée dont l'un est soumis à un décalage de fréquence par la fréquence $f_2$ pour constituer un rayon partiel de la fréquence $n_2+f_2$, la fréquence $n_2$ de l'autre rayon partiel restant inchangée, de manière à ce que les deux rayons partiels forment la paire $n_2$, $n_2+f_2$,
– les rayons partiels de la paire de rayons partiels $n_1$, $n_1+f_1$ et ceux de la paire de rayons partiels $n_2$, $n_2+f_2$ sont réunis et amenés ensemble vers le même détecteur photoélectrique en passant d'abord par le même interféromètre Michelson et ensuite par le même polarisateur, de manière à ce que les deux rayons partiels de la paire de rayons partiels $n_2$, $n_2+f_2$ interfèrent eux aussi devant le détecteur photoélectrique et que se forme, en plus du battement de la fréquence $f_1$, au moins un battement de la fréquence $f_2$, saisi par le photodétecteur,
– les quatre rayons partiels réunis passent, en plus, avant leur entrée dans l'interféromètre Michelson, par un élément optique agissant comme un demi-miroir non polarisant et déviant une partie de ces rayons partiels par l'intermédiaire d'un autre polarisateur vers un autre détecteur photoélectrique, de manière à ce que les quatre rayons partiels réunis interfèrent devant cet autre détecteur photoélectrique et que se forment des battements dont au moins ceux des fréquences $f_1$ et $f_2$ sont saisis par cet autre détecteur photoélectrique,

EP 0 314 709 B1

– les signaux des deux détecteurs photoélectriques sont démodulés selon le carré de leur amplitude correspondante, d'où il résulte, pour chacun, un signal démodulé de la fréquence $f_1-f_2$, et

– la différence de phase est mesurée entre les deux signaux démodulés et varie de manière linéaire en fonction des modifications du trajet optique.

2. Procédé selon la revendication 1, caractérisé en ce que le rayon laser de la fréquence $n_1$ et celui de la fréquence $n_2$ sont fournis chacun par une source lumineuse au laser séparée.

3. Procédé selon la revendication 1, caractérisé en ce que le rayon laser de la fréquence $n_1$ et celui de la fréquence $n_2$ sont fournis par la même source lumineuse au laser en mesure de produire au moins les deux rayons laser des fréquences $n_1$ et $n_2$.

4. Procédé selon la revendication 1, caractérisé en ce qu'il est exécuté avec l'utilisation des mêmes rayons laser d'une seule source lumineuse au laser simultanément dans deux interféromètres Michelson, celui de la première réalisation comprenant la distance d'interférence variable et celui de la deuxième réalisation ne comportant que des distances de référence stables, et en ce que la valeur de la diférence de phase mesurée dans la deuxième réalisation se réapplique à la source lumineuse au laser dans une boucle de commande en vue de la stabilisation des fréquences $n_1$ et $n_2$.

5. Procédé selon la revendication 1, caractérisé en ce que l'on l'exécute en utilisant les mêmes rayons laser d'une seule source lumineuse au laser simultanément dans deux interféromètres Michelson, celui de la première réalisation comprenant la distance d'interférence variable et celui de la deuxième réalisation ne comportant que des distances de référence stables, et en ce que la valeur de la différence de phase mesurée dans la deuxième réalisation est amenée vers un ordinateur en vue de la correction de la valeur mesurée pour la différence de phase dans la première réalisation.

6. Procédé selon la revendication 4 ou 5, caractérisé en ce que l'on utilise, au moins dans une distance d'interférence de l'interféromètre Michelson de la deuxième réalisation, une fibre optique d'une longueur optique prédéterminée et constante.

7. Procédé selon la revendication 1, caractérisé en ce que la démodulation du signal d'au moins un détecteur photoélectrique s'effectue selon le carré de l'amplitude de ce signal par un mélange de ce dernier avec lui-même.

8. Procédé selon la revendication 1, caractérisé en ce que la démodulation du signal d'au moins un détecteur photoélectrique s'effectue selon le carré de l'amplitude de ce signal de redressement de lissage du signal.

9. Application du procédé selon la revendication 1 pour déterminer des positions ou des distances en tant qu'écarts entre deux positions.

10. Application selon la revendication 9, caractérisée en ce que, pour remédier à l'incertitude de la mesure de distance, correspondant à un certain nombre de moitiés de longueurs d'onde de la fréquence de différence $n_1-n_2$, on déplace un miroir de l'interféromètre Michelson le long de la distance à mesurer tout en formant, pendant ce mouvement, l'intégrale de temps de la différence de phase mesurée, laquelle intégrale de temps varie de manière linéaire avec la position mesurée.

11. Application selon la revendication 9, caractérisée en ce que, pour remédier à l'incertitude de la mesure de distance, correspondant à un certain nombre de moitiés de longueurs d'onde de la fréquence de différence $n_1-n_2$, on modifie la fréquence d'au moins un des rayons laser en tant que fonction de temps, tout en formant, pendant cette modification, l'intégrale de temps de la différence de phase mesurée, laquelle intégrale de temps varie de manière linéaire avec la position mesurée.

12. Dispositif pour réaliser le procédé selon la revendication 1, comprenant :

– un dispositif laser (10, 20) pour produire un rayon laser (11) de la fréquence $n_1$,

– un premier élément optique (12) attribué au rayon laser (11) de la fréquence $n_1$ et agissant en tant que demi-miroir polarisant, en vue de la division du rayon laser en une paire de rayons partiels de polarisation croisée, de la fréquence $n_1$ (13, 14),

– un modulateur (18) disposé sur un des rayons partiels (13) de la paire de rayons partiels de la fréquence $n_1$ en vue du décalage de la fréquence de ce rayon partiel par la fréquence $f_1$ avec formation d'une paire de rayons partiels des fréquences $n_1$, $n_1+f_1$,

– un interféromètre Michelson avec une entrée optique (40) et une sortie optique (40), et

– un premier détecteur photoélectrique (35), devant lequel se trouve un polarisateur (34),

caractérisé en ce que le dispositif laser (10, 20) peut produire un deuxième rayon laser (21) de la fréquence $n_2$ et en ce que le dispositif comprend en outre :

– un deuxième élément optique (22) attribué au rayon laser de la fréquence $n_2$ et agissant en tant que demi-miroir polarisant, en vue de la division de ce deuxième rayon laser en une paire de rayons partiels de polarisation croisée, de la fréquence $n_2$ (23, 24),

– un modulateur (28) disposé sur un des rayons partiels (23) de la paire de rayons partiels de la fréquence $n_2$ en vue du décalage de la fréquence de ce rayon partiel par la fréquence $f_2$ avec formation d'une paire

**12**

de rayons partiels $n_2$, $n_2 + f_2$,

– une première paire de miroirs de déviation (15, 17) et un troisième élément optique (16) agissant en tant que demi-miroir polarisant en vue de la réunion (19) des rayons partiels de la paire de rayons partiels $n_1$, $n_1+f_1$, ainsi qu'une deuxième paire de miroirs de déviation (25, 27) et un quatrième élément optique (26) agissant en tant que demi-miroir polarisant en vue de la réunion (29) des rayons partiels de la paire de rayons partiels $n_2$, $n_2+f_2$,

– un deuxième détecteur photoélectrique (45), devant lequel se trouve un polarisateur (44),

– un élément optique (30) agissant en tant que demi-miroir non polarisant en vue de la division des rayons partiels (19) de la parie de rayons partiels $n_1$, $n_1+f_1$ et des rayons partiels (29) de la paire de rayons partiels $n_2, n_2+f_2$ chacune en un rayon lumineux de mesure (32) et un rayon lumineux de référence (33), et du décalage des rayons lumineux de référence correspondant sur le premier détécteur photoélectrique (35) et des rayons lumineux de mesure correspondants sur l'entrée optique (40) de l'interféromètre Michelson, tandis que le deuxième détécteur photoélectrique (45) est disposé par rapport à la sortie de l'interféromètre Michelson de manière à ce que les rayons lumineux de mesure (43) sortant à la sortie optique (40) de l'interféromètre Michelson sont dirigés vers le deuxième détecteur photoélectrique (45),

– des dispositifs (36, 46) attribués à chaque détecteur photoélectrique en vue de la démodulation d'un signal du détecteur photoélectrique selon le carré de l'amplitude de ce signal et pour la production d'un signal démodulé correspondant, et

un dispositif (50) pour mesurer la différence de phase entre les deux signaux démodulés.

13. Dispositif selon la revendication 12, caractérisé en ce que le dispositif laser comprend deux sources lumineuses au laser separées (10, 20).

14. Dispositif selon la revendication 13, caractérisé en ce que les sources lumineuses au laser sont des diodes laser.

15. Dispositif selon la revendication 12, caractérisé en ce que le dispositif laser (70) comprend une seule source lumineuse au laser capable de produire au moins deux rayons laser de fréquence différente.

16. Dispositif pour exécuter le procédé selon la revendication 1, comprenant :

– un dispositif laser (70) pour la production d'un rayon laser des fréquences $n_1$ et $n_2$,

– un élément optique (73) agissant en tant que demi-miroir non polarisant pour la division du rayon laser en un rayon partiel continu et un rayon partiel dévié,

– une première réalisation dans laquelle on fait passer le rayon laser partiel dévié, et

– une deuxième réalisation supplémentaire dans laquelle on fait passer le rayon laser partiel continu,

ces deux réalisation étant, à l'exception du dispositif laser, (70) identiques et définies selon la revendication 12, et l'interféromètre Michelson de la première réalisation (71) comprenant la distance d'interférence variable, tandis que l'interféromètre Michelson de la deuxième réalisation (72) ne comporte que des distances de référence stables.

17. Dispositif selon la revendication 16, caractérisé en ce qu'au moins une distance d'interférence de l'interféromètre Michelson supplémentaire (72) se présente sous la forme d'une fibre optique de longueur optique constante.

18. Dispositif selon la revendication 16, caractérisé en ce qu'un rappel de la valeur de la différence de phase (75) qui est mesurée dans la réalisation partielle supplémentaire (72, 75) du dispositif, sur le dispositif laser (70) est prévu dans une boucle de commande en vue de la stabilisation de la source lumineuse au laser.

19. Dispositif selon la revendication 16, caractérisé en ce qu'un rappel de la valeur de la différence de phase (75) qui est mesurée dans la réalisation partielle supplémentaire (72, 75) du dispositif, sur un ordinateur (76) est prévue pour la correction de la valeur de la différence de phase mesurée dans la première réalisation (71) et indiquée sur un dispositif d'affichage (51).

20. Dispositif selon la revendication 12, caractérisé en ce qu'au moins un des dispositifs de démodulation (36, 46) se présente sous la forme d'un dispositif permettant de mélanger le signal avec lui-même.

21. Dispositif selon la revendication 12, caractérisé en ce qu'au moins un des dispositifs de démodulation (36, 46) se présente sous la forme d'un dispositif de redressement et de lissage du signal.

22. Dispositif selon la revendication 12, caractérisé en ce qu'un ordinateur (76) est relié au dispositif (50) pour mesurer la différence de phase, au dispositif laser (10, 20 ; 70) et, le cas échéant, à un dispositif d'affichage (51), ledit ordinateur étant destiné et programmé pour modifier la fréquence d'au moins un des rayons laser en tant que fonction de temps afin de remédier à l'incertitude de la mesure de distance, incertitude correspondant à un certain nombre de moitiés de longueur d'onde de la fréquence de différence $n_1-n_2$, et pour former, pendant cette modification, l'intégrale de temps de la différence de phase mesurée, ladite intégrale de temps étant variable de manière linéaire avec la position mesurée et, le cas échéant, dirigée vers le dispositif d'affichage (51).

Fig. 1

# Fig. 2

Fig. 3

## Fig. 4